# FASCICULE DE BREVET EUROPEEN

(11) **EP 1 153 819 B1**
(45) Date de publication et mention de la délivrance du brevet: **16.03.2005**
(21) Numéro de dépôt: 01401163.9
(22) Date de dépôt: 04.05.2001
(51) Int. Cl.: B62D 25/04, B62D 25/06

(54) **Assemblage élémentaire de carrosserie pour véhicule automobile**
Elementärer Zusammenbau für Kraftfahrzeugkarrosserie
Elementary vehicle body assembly

(30) Priorité: 09.05.2000 FR 0005861
(43) Date de publication de la demande: 14.11.2001
(73) Titulaire: Peugeot Citroen Automobiles SA, 92200 Neuilly sur Seine (FR)
(72) Inventeur: Veron-Delor, Laurent, 28130 Manches (FR)
(74) Mandataire: Bentz, Jean-Paul

(56) Documents cités:
- DE-A- 19 519 779
- US-A- 5 018 781
- US-A- 5 213 391
- US-A- 5 269 585

## Description

La présente invention concerne, de façon générale, un assemblage élémentaire de carrosserie pour véhicule automobile, c'est-à-dire un sous-ensemble local d'une telle carrosserie.

Plus précisément, l'invention concerne un assemblage élémentaire de carrosserie pour véhicule automobile, comprenant un côté de caisse, une doublure d'arc pavillon, une doublure de montant de baie, et une traverse avant de pavillon, assemblage dans lequel le côté de caisse, la doublure d'arc pavillon, et la doublure de montant de baie forment un corps creux se raccordant à la traverse avant de pavillon par une liaison nodale à trois branches, et dans lequel au moins un premier décrochement de surface est prévu pour offrir à cet assemblage une surface externe frontale lisse définie au moins partiellement par la doublure de montant de baie et la liaison nodale, et propre à recevoir un pare-brise.

Un tel assemblage, aujourd'hui couramment utilisé sur certains véhicules et correspondent au US-A-5 269 585, est illustré aux figures 1 à 4.

En dépit des progrès considérables qui ont marqué l'évolution récente des carrosseries automobiles, notamment au plan de la sécurité, la conception de ces carrosseries continue de faire l'objet de recherches intensives visant à en optimiser la résistance à poids constant.

En réalité, dans la mesure où le respect de l'environnement conduit parallèlement à prendre des mesures visant à réduire la consommation de carburant des véhicules automobiles, et notamment à réduire le poids de ces derniers, la conception de nouvelles carrosseries a le souci plus ambitieux encore d'obtenir à la fois une augmentation de la résistance et une réduction de poids de ces carrosseries.

Or, dans la mesure où ces deux objectifs sont naturellement antinomiques l'un de l'autre, les difficultés rencontrées pour les concilier sont considérables.

L'invention, qui se situe dans ce domaine, a précisément pour but de proposer un assemblage élémentaire de carrosserie pour véhicule automobile répondant simultanément à ces deux objectifs.

A cette fin, l'assemblage de l'invention, par ailleurs conforme à la définition générique qu'en donne le préambule précédent, est essentiellement caractérisé en ce que la doublure d'arc pavillon et la doublure de montant de baie forment ensemble une pièce unique de doublure exempte de décrochement de surface.

Grâce à un tel agencement, l'assemblage ne présente aucun décrochement de surface le long de la doublure de montant de baie et de la doublure d'arc de pavillon, donc aucune amorce de flambage susceptible de fragiliser l'assemblage vis-à-vis d'un choc frontal entraînant un effort de compression de cet assemblage.

Pour permettre ou faciliter la fabrication de cet assemblage, le gousset peut être percé d'un orifice autorisant le passage d'une pince permettant de souder le corps creux, le gousset et la traverse avant pavillon pouvant par ailleurs être dotés d'une liaison de type ergot-entaille permettant leur positionnement relatif au moins pendant une phase préparatoire de l'assemblage.

Dans le mode de réalisation préféré de l'invention, un second décrochement de surface est formé dans le gousset pour permettre à la surface externe frontale lisse de cet assemblage d'être définie au moins partiellement par la liaison nodale et la traverse avant pavillon, la face externe du gousset se raccordant à une face interne de la traverse avant pavillon grâce à ce second décrochement.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue générale en perspective d'une carrosserie de véhicule automobile, permettant de localiser l'assemblage qui fait plus particulièrement l'objet de la présente invention;
- La figure 2 est une vue détaillée en perspective éclatée représentant un assemblage de carrosserie connu;
- La figure 3 est une vue en perspective partielle et rapprochée de l'assemblage de carrosserie connu illustré à la figure 2;
- La figure 4 est une vue en coupe de l'assemblage de carrosserie connu illustré aux figures 2 et 3, cet assemblage étant observé suivant l'incidence repérée par les flèches IV-IV dé la figure 3;
- La figure 5 est une vue détaillée en perspective éclatée représentant un assemblage de carrosserie conforme à la présente invention;
- La figure 6 est une vue en perspective partielle et rapprochée de l'assemblage de carrosserie de l'invention, tel qu'illustré à la figure 5; et
- La figure 7 est une vue en coupe de l'assemblage de carrosserie de l'invention tel qu'illustré aux figures 5 et 6, cet assemblage étant observé suivant l'incidence repérée par les flèches VII-VII de la figure 6.

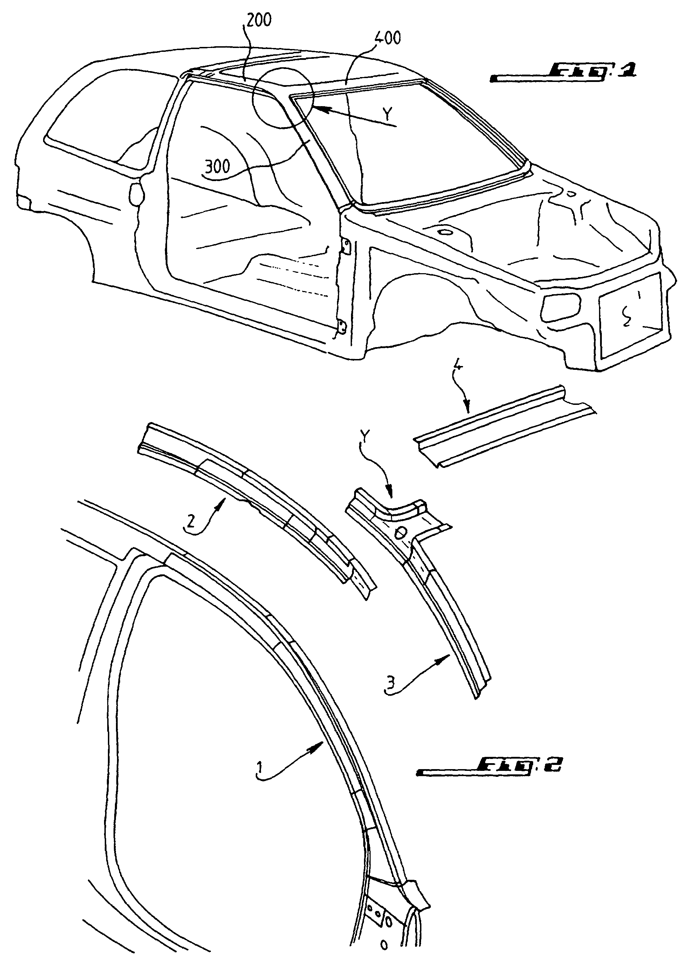

Comme le montre la figure 1, l'invention se rapporte à l'assemblage de la partie d'une carrosserie de véhicule automobile qui concerne en particulier l'arc de pavillon 200, le montant de baie 300, et la traverse avant de pavillon 400 de ce véhicule.

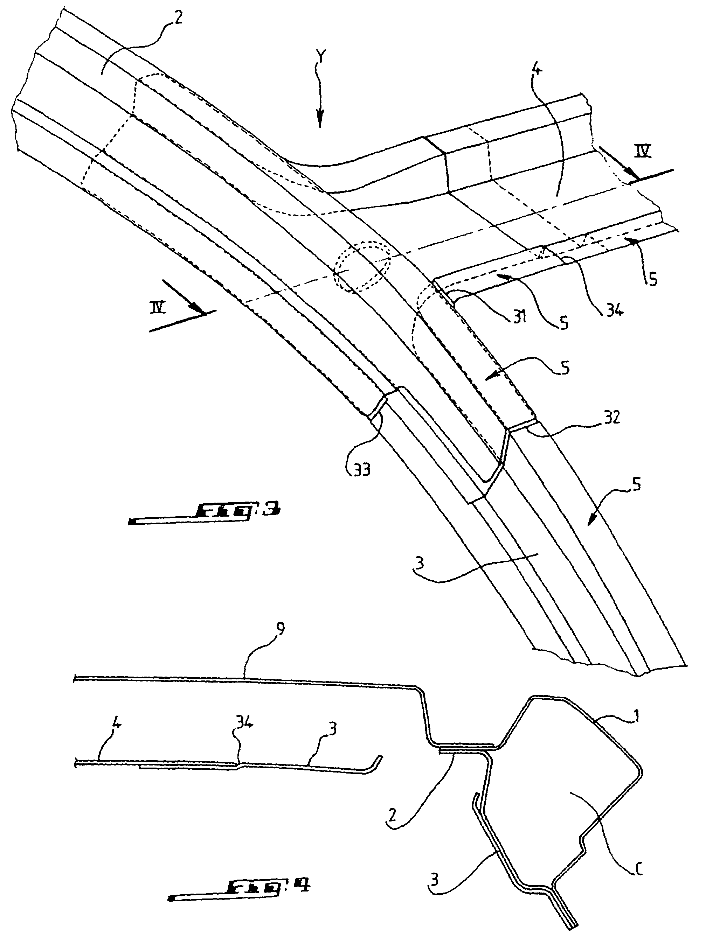

Plus précisément (figure 2), cet assemblage comprend un côté de caisse 1, une doublure d'arc pavillon 2, une doublure de montant de baie 3, et la traverse avant de pavillon 4.

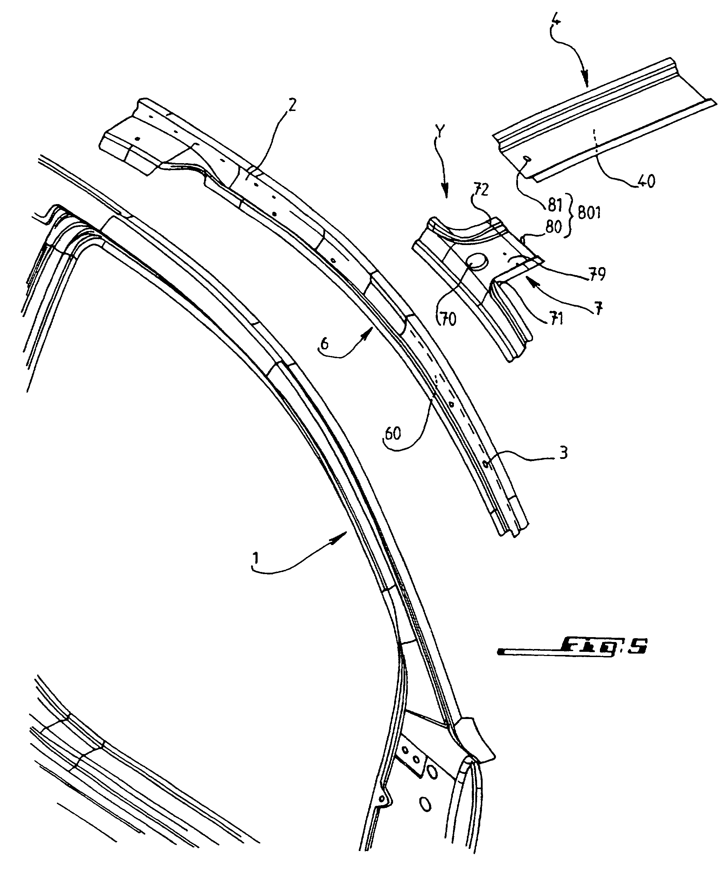

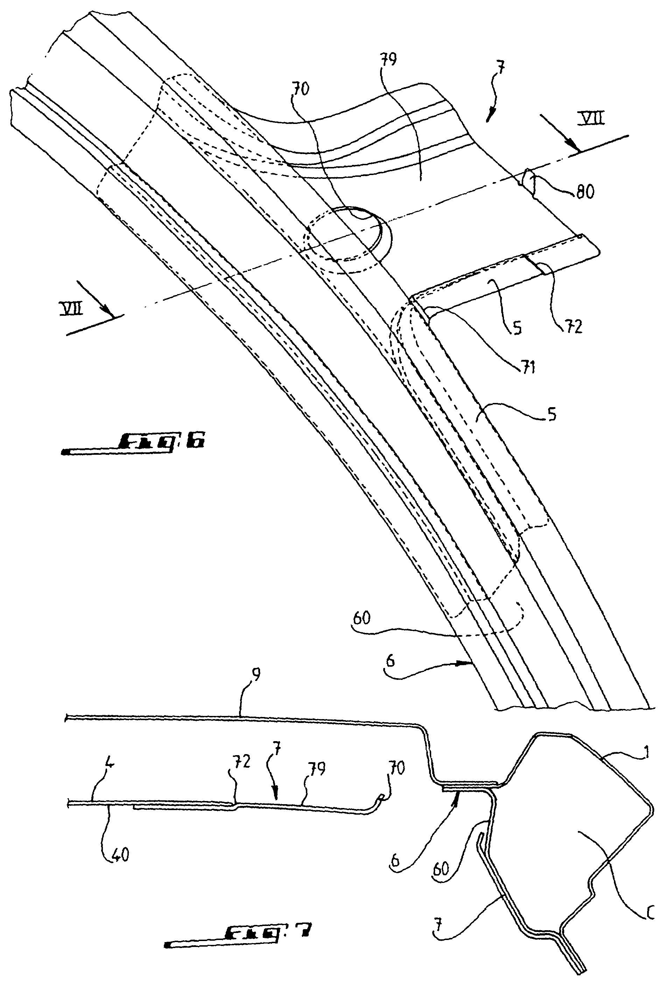

Comme le montrent plus spécifiquement les figures 2 et 4, le côté de caisse 1, la doublure d'arc pavillon 2, et la doublure de montant de baie 3 forment ensemble un corps creux C qui se raccorde à la traverse avant de pavillon 4 par une liaison nodale Y à trois branches.

Comme le montre la figure 3, cette solution connue prévoit, dans la doublure de montant de baie 3, plusieurs décrochements de surface tels que 31, 32 et 33.

Ces décrochements, qui sont appelés "soyages" par l'homme de l'art, et qui sont obtenus par estampage sans variation sensible d'épaisseur, permettent en l'occurrence à la doublure de pavillon d'arc 2 et à la doublure de montant de baie 3, bien que superposées par endroits, de présenter une surface externe frontale commune et lisse 5, sur laquelle un pare-brise peut être monté et éventuellement collé.

Un autre décrochement 34 peut également être prévu pour permettre à la traverse 4, bien qu'elle soit en partie superposée à la doublure de montant de baie 3, d'affleurer à la même surface lisse 5.

Selon un premier aspect spécifique de l'invention (figure 5), la doublure d'arc pavillon 2 et la doublure de montant de baie 3 sont constituées ensemble par une pièce unique de doublure 6, qui est exempte de tout décrochement de surface, et qui présente donc une excellente résistance à la compression.

Selon un second aspect spécifique de l'invention, la liaison nodale à trois branches Y est réalisée par un gousset 7, dans lequel est pratiqué un décrochement de surface 71 permettant à la surface externe 79 du gousset 7 de se raccorder à la face interne 60 de la pièce unique de doublure 6 et offrant donc à l'assemblage, au niveau de la doublure de montant de baie 3 et de la liaison nodale Y, la surface externe frontale lisse 5 dont il a besoin pour recevoir le pare-brise (non représenté).

Comme le montrent les figures 5 à 7, le gousset 7 est avantageusement percé d'un orifice 70 autorisant le passage d'une pince de soudure électrique, grâce à laquelle le pavillon 9, là pièce unique de doublure 6, et le côté de caisse 1 peuvent être soudés ensemble par une opération qui a donc aussi pour effet de souder le corps creux C.

Comme le montre la figure 5, le gousset 7 peut être doté d'un ergot 80 susceptible d'être introduit dans une entaille 81 de la traverse avant pavillon 4, la liaison 801 que forment ensemble cet ergot 80 et cette entaille 81 permettant d'obtenir un positionnement relatif adéquat du gousset 7 et de la traverse avant pavillon 4 pendant la phase de fabrication de l'assemblage qui prépare le soudage.

Comme le montrent par ailleurs les figures 5 à 7, un second décrochement de surface 72 est formé dans le gousset 7 pour permettre à la face externe 79 du gousset 7 de se raccorder à la face interne 40 de la traverse avant pavillon 4 et d'offrir par conséquent à l'assemblage, au niveau de la liaison nodale Y et de la traverse avant pavillon 4, la surface externe frontale lisse 5 dont il a besoin pour recevoir le pare-brise (non représenté).

## Revendications

1. Assemblage élémentaire de carrosserie pour véhicule automobile, comprenant un côté de caisse (1), une doublure d'arc pavillon (2), une doublure de montant de baie (3), et une traverse avant de pavillon (4), dans lequel le côté de caisse (1), la doublure d'arc pavillon (2), et la doublure de montant de baie (3) forment un corps creux se raccordant à la traverse avant de pavillon (4) par une liaison nodale (Y) à trois branches, **caractérisé en ce que** la doublure d'arc pavillon (2) et la doublure de montant de baie (3) forment ensemble une pièce unique de doublure (6) exempte de décrochement de surface.

2. Assemblage élémentaire de carrosserie suivant la revendication 1, **caractérisé en ce qu'**au moins un premier décrochement de surface (71) est prévu pour offrir à cet assemblage une surface externe frontale lisse (5) définie au moins partiellement par la doublure de montant de baie (3) et la liaison nodale (Y), et propre à recevoir un pare-brise.

3. Assemblage élémentaire de carrosserie suivant la revendication 1 ou 2, **caractérisé en ce que** le premier décrochement de surface est formé dans un gousset (7) qui assure la liaison nodale (Y), ce gousset présentant une face externe (79) qui se raccorde à une face interne (60) de la pièce unique de doublure (6) grâce au premier décrochement de surface (71).

4. Assemblage élémentaire de carrosserie suivant la revendication 3, **caractérisé en ce que** le gousset (7) est percé d'un orifice (70) autorisant le passage d'une pince permettant de souder le corps creux.

5. Assemblage élémentaire de carrosserie suivant la revendication 3 ou 4, **caractérisé en ce que** le gousset (7) et la traverse avant pavillon (4) sont dotés d'une liaison (801) de type ergot-entaille permettant leur positionnement relatif au moins pendant une phase préparatoire de l'assemblage.

6. Assemblage élémentaire de carrosserie suivant l'une quelconque des revendications précédentes, **caractérisé en ce qu'**un second décrochement de surface (72) est formé dans le gousset (7) pour permettre à la surface externe frontale lisse (5) de cet assemblage d'être définie au moins partiellement par la liaison nodale (Y) et la traverse avant pavillon (4), la face externe (79) du gousset (7) se raccordant à une face interne (40) de la traverse avant pavillon (4) grâce au second décrochement (72).

## Claims

1. Bodywork subassembly for motor vehicles, comprising a body side member (1), a roof arch liner (2), a windshield upright liner (3) and a roof front crossmember (4), wherein the body side member (1), the roof arch liner (2) and the windshield upright liner (3) form a hollow body connected to the roof front crossmember (4) by a three-way nodal connection (Y), **characterised in that** the roof arch liner (2) and the windshield upright liner (3) together form a one-piece liner (6) with an entirely smooth surface.

2. Bodywork subassembly according to claim 1, **characterised in that** it comprises at least one first surface step (71) such that the subassembly has a smooth front external surface (5) that is at least partly defined by the windshield upright liner (3) and the nodal connection (Y) and is adapted to receive a windshield.

3. Bodywork subassembly according to claim 1 or claim 2, **characterised in that** the first surface step is formed in a connecting member (7) that provides the nodal connection (Y) and has an external face (79) that is connected to an internal face (60) of the one-piece liner (6) by the first surface step (71).

4. Bodywork subassembly according to claim 3, **characterised in that** the connecting member (7) comprises an orifice (70) adapted to allow a clamp for welding the hollow body to pass through it.

5. Bodywork subassembly according to claim 3 or claim 4, **characterised in that** the connecting member (7) and the roof front crossmember (4) are provided with a lug and cut-out connection (801) enabling relative positioning thereof at least during a preparatory phase of assembly.

6. Bodywork subassembly according to any preceding claim, **characterised in that** the connecting member (7) comprises a second surface step (72) such that the smooth front external surface (5) of the assembly is at least partly defined by the nodal connection (Y) and the roof front crossmember (4), the external face (79) of the connecting member (7) being connected to an internal face (40) of the roof front crossmember (4) by way of the second step (72).

## Patentansprüche

1. Karosseriegrundaufbau für Kraftfahrzeuge, mit einem Karosserieseitenteil (1). einem Dachbogenprofil (2), einem Rahmensäulenprofil (3) und einem vorderen Dachquersteg (4), wobei das Karosserieseitenteil (1), das Dachbogenprofil (2) und das Rahmensäulenprofil (3) einen Hohlkörper bilden, der sich über eine dreischenklige Knotenverbindung (Y) an den vorderen Dachquersteg (4) anschließt, **dadurch gekennzeichnet, dass** das Dachbogenprofil (2) und das Rahmensäulenprofil (3) zusammen ein gemeinsames Profilteil (6) bilden, das frei von Flächenabstufungen ist.

2. Karosseriegrundaufbau nach Anspruch 1, **dadurch gekennzeichnet, dass** zumindest eine erste Flächenabstufung (71) vorgesehen ist, um diesem Fahrzeugaufbau eine glatte Außenstirnfläche (5) zu verleihen, die zumindest teilweise durch das Rahmensäulenprofil (3) und die Knotenverbindung (Y) definiert ist und eine Windschutzscheibe aufnehmen kann.

3. Karosseriegrundaufbau nach Anspruch 1 oder 2, **dadurch gekennzeichnet, dass** die erste Flächenabstufung in einem Keilstück (7) gebildet ist, welches die Knotenverbindung (Y) gewährleistet, wobei dieses Keilstück eine Außenseite (79) aufweist, die sich über die erste Flächenabstufung (71) an eine Innenseite (60) des gemeinsamen Profilteils (6) anschließt.

4. Karosseriegrundaufbau nach Anspruch 3, **dadurch gekennzeichnet, dass** das Keilstück (7) mit einer Bohrung (70) versehen ist, welche den Durchtritt einer Klemme gestattet, um den Hohlkörper zu verschweißen.

5. Karosseriegrundaufbau nach Anspruch 3 oder 4, **dadurch gekennzeichnet, dass** das Keilstück (7) und der vordere Dachquersteg (4) mit einer Verbindung (801) vom Typ Nut- und Federverbindung versehen sind, welche deren relative Positionierung zumindest während einer Vorbereitungsphase des Zusammenbaus ermöglicht.

6. Karosseriegrundaufbau nach einem der vorangehenden Ansprüche, **dadurch gekennzeichnet, dass** in dem Keilstück (7) eine zweite Flächenabstufung (72) gebildet ist, um zu ermöglichen, dass die glatte Außenstirnfläche (5) dieses Aufbaus zumindest teilweise von der Knotenverbindung (Y) und dem vorderen Dachquersteg (4) definiert wird, wobei die Außenseite (79) des Keilstücks (7) sich über die zweite Abstufung (72) an eine Innenseite (40) des vorderen Dachquerstegs (4) anschließt.
